(19) Europäisches Patentamt
European Patent Office
Office européen des brevets

(11) **EP 3 076 915 B1**

(12) **EUROPEAN PATENT SPECIFICATION**

(45) Date of publication and mention
of the grant of the patent:
**03.06.2020  Bulletin 2020/23**

(51) Int Cl.:
**A61H 23/04** *(2006.01)*   **G01L 27/00** *(2006.01)*
**F04B 43/00** *(2006.01)*   **F04B 51/00** *(2006.01)*

(21) Application number: **13898731.8**

(22) Date of filing: **02.12.2013**

(86) International application number:
**PCT/US2013/072651**

(87) International publication number:
**WO 2015/084312 (11.06.2015 Gazette 2015/23)**

(54) **METHODS AND SYSTEMS FOR AUTO-CALIBRATION OF A PNEUMATIC COMPRESSION DEVICE**

VERFAHREN UND SYSTEME ZUR AUTOMATISCHEN KALIBRIERUNG EINER PNEUMATISCHEN KOMPRESSIONSVORRICHTUNG

PROCÉDÉS ET SYSTÈMES POUR L'ÉTALONNAGE AUTOMATIQUE D'UN DISPOSITIF DE COMPRESSION PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.10.2016  Bulletin 2016/41**

(73) Proprietor: **Tactile Systems Technology, Inc.
Minneapolis, MN 55413 (US)**

(72) Inventors:
• **YURKO, Gregory
  Murrysville, PA 15668 (US)**
• **EGGERS, Calvin
  Pittsburgh, PA 15235 (US)**

(74) Representative: **Uexküll & Stolberg
Partnerschaft von
Patent- und Rechtsanwälten mbB
Beselerstraße 4
22607 Hamburg (DE)**

(56) References cited:
**US-A- 4 011 860       US-A- 4 408 599
US-A- 5 307 791       US-A1- 2011 082 401
US-A1- 2013 125 613   US-B2- 6 544 202**

EP 3 076 915 B1

**Description**

BACKGROUND

Diseases such as venous insufficiency and lymphedema can often result in the pooling of bodily fluids in areas of the body distal from the heart. Venous insufficiency can result when the superficial veins of an extremity empty into the deep veins of the lower leg. Normally, the contractions of the calf muscles act as a pump, moving blood into the popliteal vein, the outflow vessel. Failure of this pumping action can occur as a result of muscle weakness, overall chamber size reduction, valvular incompetence and/or outflow obstruction. Each of these conditions can lead to venous stasis and hypertension in the affected area. Lymphedema, which is swelling due to a blockage of the lymph passages, may be caused by lymphatic obstruction, a blockage of the lymph vessels that drain fluid from tissues throughout the body. This is most commonly due to cancer surgery, general surgery, tumors, radiation treatments, trauma and congenital anomalies. Lymphedema is a chronic condition that currently has no cure.

Fluid accumulation can be painful and debilitating if not treated. Fluid accumulation can reduce oxygen transport, interfere with wound healing, provide a medium that support infections, or even result in the loss of a limb if left untreated.

Compression pumps are often used in the treatment of venous insufficiency by moving the accumulated bodily fluids. Such pumps typically include an air compressor that may blow air through tubes to an appliance such as a sleeve or boot containing a number of separately inflatable cells that is fitted over a problem area (such as an extremity or torso). Such pumps may also include pneumatic components adapted to inflate and exhaust the cells, and control circuitry governing the pneumatic components. A therapeutic cycle typically involves sequential inflation of the cells to a pre-set pressure in a distal to a proximal order, followed by exhausting all the cells in concert.

While such a compression device may be used in therapy for lymphedema, other pathologies, including venous stasis ulcers, soft tissue injuries, and peripheral arterial disease, and the prevention of deep vein thrombosis may be improved by the use of such a compressor device. However, a therapeutic protocol that may be useful for lymphedema may not be appropriate for other pathologies. Improved systems and methods for implementing and controlling a pneumatic compression device to assist in a variety of therapeutic protocols would be desirable. Patent Document US2011/082401 A1 discloses an apparatus and method for treatment of patients suffering from lymphedema. The apparatus includes a multiple chamber sleeve positioned in a wrap around fashion on a body extremity to be treated. The chambers are sequentially inflated and maintained so until all chambers are inflated and then all the chambers are simultaneously deflated except the proximal end chamber to move edema fluids out of the afflicted area.

SUMMARY

It must also be noted that as used herein and in the appended claims, the singular forms "a," "an," and "the" include plural references unless the context clearly dictates otherwise. Thus, for example, reference to a "valve" is a reference to one or more valves and equivalents thereof known to those skilled in the art, and so forth. Unless defined otherwise, all technical and scientific terms used herein have the same meanings as commonly understood by one of ordinary skill in the art. Although any methods, materials, and devices similar or equivalent to those described herein can be used in the practice or testing of embodiments, the preferred methods, materials, and devices are now described. All publications mentioned herein are incorporated by reference. Nothing herein is to be construed as an admission that the embodiments described herein are not entitled to antedate such disclosure by virtue of prior invention.

For the purpose of this disclosure, the term "open", when referring to a valve or valve system, may be defined as a state of the valve or valve system in which a structure associated with a first side of the valve is placed in fluid communication with a structure associated with a second side of the valve.

For the purpose of this disclosure, the term "closed", when referring to a valve or valve system, may be defined as a state of the valve or valve system in which a structure associated with a first side of the valve is not placed in fluid communication with a structure associated with a second side of the valve.

For the purpose of this disclosure, the term "inflatable compression sleeve", "compression sleeve" or "appliance" may all refer to a device comprising at least one inflatable cell, being designed to provide an amount of pressure to a tissue. Non-limiting examples of such inflatable compression sleeve may comprise one or more of a chest sleeve, a foot sleeve, an ankle sleeve, a calf sleeve, a lower leg sleeve, a thigh sleeve, an upper leg sleeve, a lower arm sleeve, an upper arm sleeve, a wrist sleeve, a hand sleeve, a chest sleeve, a single shoulder sleeve, a back sleeve, an abdomen sleeve, a buttocks sleeve, a genital sleeve, and combinations thereof.

In one descriptive example a method of auto-calibrating a pneumatic compression therapy device may comprise providing a compression therapy device including an inflatable compression sleeve comprising an inflatable cell, a fill manifold configurable to be in fluid communication with the inflatable cell, a fluid source having a source output configured to introduce a fluid into the inflatable cell via the fill manifold, a cell valve disposed between the inflatable cell and the fill manifold, a pressure sensor, and a controller configured to receive pressure sensor data from the pressure sensor,

and to control one or more actions of the cell valve and the fluid source. The controller may further comprise at least one processor device and at least one non-transitory memory storage device. The method may further comprise receiving, by the cell, a first portion of fluid from the fluid source and receiving, by the controller, dynamic pressure sensor data related to a dynamic pressure within the cell, receiving, by the controller, static pressure sensor data related to a static pressure within the cell, calculating, by the controller, a pressure difference between the dynamic pressure sensor data and the static pressure sensor data, and calibrating, by the controller, a dynamic pressure sensor target value based, at least in part, on one or more of a static pressure sensor target value, the dynamic pressure sensor data, the static pressure sensor data, and the pressure difference.

BRIEF DESCRIPTION OF THE DRAWINGS

Aspects, features, benefits and advantages of the embodiments described herein will be apparent with regard to the following description, appended claims, and accompanying drawings where:

FIGS. 1a, b illustrate embodiments of a pneumatic compression device in accordance with the present disclosure.
FIGS. 2a-d illustrate various embodiments of cells used in a pneumatic compression device in accordance with the present disclosure.
FIG. 3 is a block diagram of an embodiment of hardware that may be used to contain or implement program instructions in accordance with the present disclosure.
FIGS. 4-9 illustrate a variety of embodiments of therapeutic protocols in accordance with the present disclosure.
FIG. 10 is a flowchart of an embodiment of a method for auto-calibration of a pneumatic compression device in accordance with the present disclosures.
FIGS. 11a-c depict various embodiments of systems to which a method of auto-calibration may apply in accordance with the present disclosure.

DETAILED DESCRIPTION

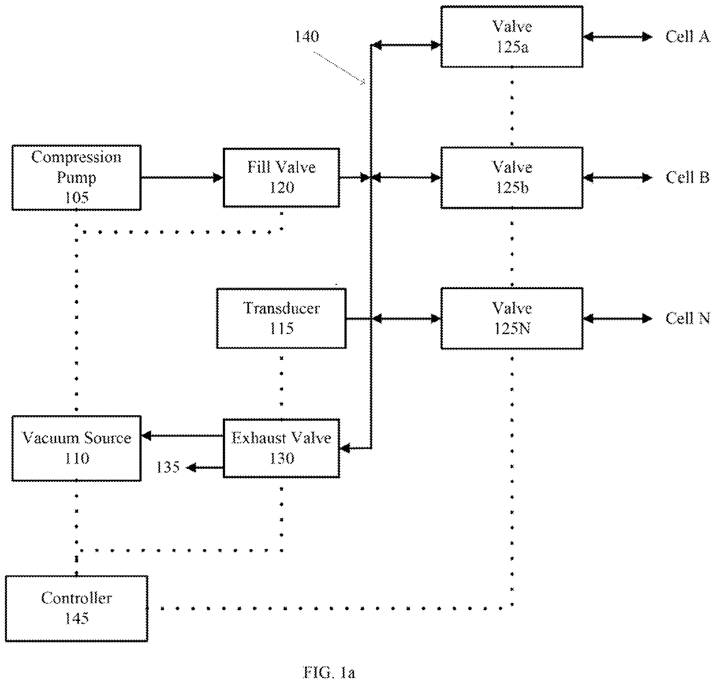

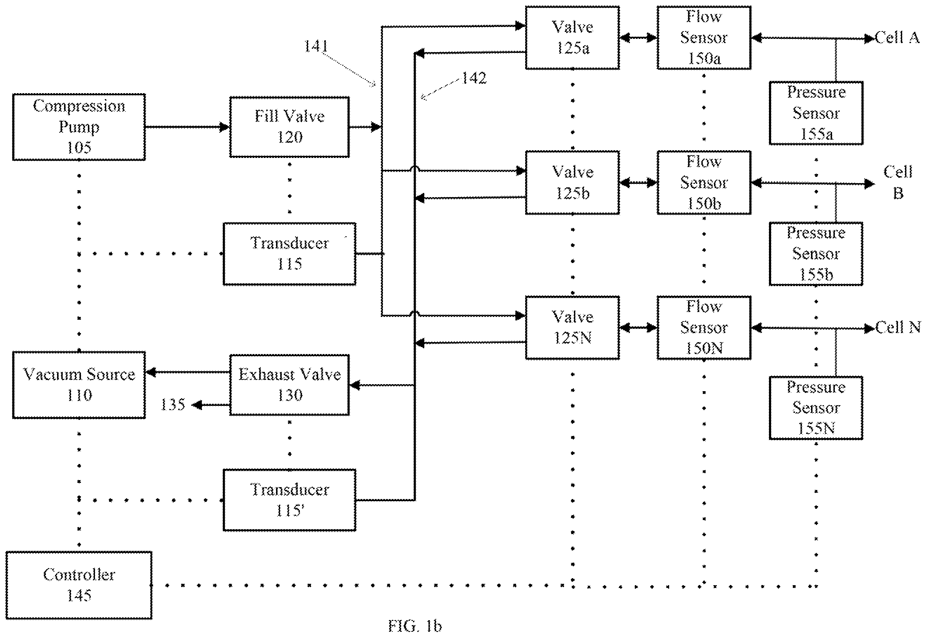

FIGS. 1a ,b depict embodiments of a pneumatic compression device. As shown in FIG. 1a, the pneumatic compression device may include one or more compression pumps 105, a fill valve 120, a vacuum source 110, an exhaust valve 130, a transducer 115, a controller 145 and a plurality of cell valves, such as 125a-N. The compression pump 105 may be used as a source of a pressurized fluid, including, without limitation, air, nitrogen, or water. The fill valve 120 may be in fluid connection with the compression pump 105 through a pressure pump output to receive the pressurized fluid. During an inflation period, the fill valve 120 may open to connect the output of the compression pump 105 to a common node or manifold 140. During a deflation period, exhaust valve 130 may open to connect the common manifold 140 to, for example, a vacuum source 110 to depressurize the cells. Alternatively, exhaust valve 130 may be connected to atmosphere 135. It may be understood that the vacuum source and/or atmosphere may serve as a sink of the pressurizing fluid. One or more inputs to the vacuum or to the atmosphere may be provided. Typically, fill valve 120 and exhaust valve 130 may not be open at the same time. However, some modes of use of the compression device may benefit from the fill valve and exhaust valve being open together. Although FIG. 1a illustrates a single exhaust valve 130 capable of connecting to either a vacuum source 110 or the atmosphere 135, it may be appreciated that one exhaust valve may be used to connect the manifold 140 to the vacuum source 110, while a second exhaust valve may be used to connect the manifold 140 to atmosphere 135. Fill valve 120 and exhaust valve 130 may be manually operated, or may be automatically operated by controller 145. Additional fill and/or exhaust valves may be associated with the manifold 140. Each of the cell valves 125a-N may be connected to the common manifold 140 on a first side and a corresponding cell on a second side. Additionally, one or more sensors, such as pressure sensors or flow rate sensors, may be on the cell side of the valves. Each cell valve 125a-N may be used to selectively connect (in an open configuration) or disconnect (in a closed configuration) the corresponding cell to the common manifold 140. Cell valves 125a-N may also be manually operated or automatically operated by controller 145.

The transducer 115 may be connected to and used to monitor the pressure of the common manifold 140. The controller 145 may receive information regarding the pressure detected by the transducer 115 or by any other sensor associated with the cell valves. Based on at least the received pressure information, the controller 145 may determine whether to open or close the fill valve 120, the exhaust valve 130, and/or one or more of the cell valves 125a-N.

In an example, illustrated in FIG. 1a, the transducer 115 may have a transfer function associated with it which is used to determine the input pressure monitored at the common manifold 140. For example, the transfer function for an MPX5050 transducer manufactured by Motorola may be $V_O = V_S * (0.018 * P + 0.04) + $ Offset Error, where $V_O$ is the output voltage, $V_S$ is the supply voltage (which may be, for example, approximately 5 Volts), P is the input pressure as measured in kPa, and Offset Error is a static voltage value that is dependent on the process, voltage, and temperature of the transducer. Solving for the pressure and combining the Offset Error and $0.04V_S$ term results in the following equation:

$$(1) \qquad P(kPa) = \frac{55.6 * (V_O - V_{offset})}{V_S}$$

Equation (1) may also be represented in terms of mm Hg by converting 1 kPa to 7.5 mm Hg. The resulting equation is the following:

$$(2) \qquad P(mmHg) = \frac{417 * (V_O - V_{offset})}{V_S}$$

The transducer **115** may then be calibrated to determine the pressure based on the output voltage. Initially, $V_{offset}$ may be determined by closing all of the cell valves **125a-N** and venting the common manifold **140** to the atmosphere **135** via the exhaust valve **130**. A value determined by an analog-to-digital (A/D) converter that may either be in communication with or integral to the transducer **115** may be read when the transducer is under atmospheric pressure. The value output by the A/D converter may be an offset value (OFFSET). For a 12-bit A/D converter, OFFSET may be between 0 and 4095.

A scale value (SCALE) may also be determined that corresponds to a scaled source voltage. For example, a precision resistor divide-by-two circuit may be used to divide $V_S$ by 2. The A/D converter may output SCALE based on the $V_S / 2$ input value. For a 12-bit A/D converter, SCALE may be a value between 0 and 4095.

Substituting OFFSET and SCALE into Equation (2) results in the following equation:

$$(3) \qquad P(mmHg) = \frac{208.5 * (TRANSDUCER\_OUTPUT - OFFSET)}{SCALE} .$$

As such, the offset error and the scale error of the transducer **115** and any errors in the transducer supply voltage may be accounted for by measuring the OFFSET and SCALE values once (for example, at power up).

Alternative transducers potentially having different transfer functions may also be used within the scope of the present disclosure as will be apparent to one of ordinary skill in the art. In addition, one of ordinary skill in the art will recognize that alternate methods of calibrating a transducer may be performed based on the teachings of the present disclosure.

An additional example is illustrated in **FIG. 1b.** In this embodiment, a fill manifold **141** may be associated with the fill valve **120** and compression pump **105**. A separate exhaust manifold **142** may be associated with the vacuum source **110** and exhaust valve **130**. Cell valves **125a-N** may be associated with both the fill manifold **141** and exhaust manifold **142**. It is understood that cell valves **125a-N** in this embodiment may have a 3-way function: open to fill, open to exhaust, and closed. In an alternative embodiment, each cell may have a first valve to connect to the fill manifold **141** and a second valve to connect to the exhaust manifold **142**. In the dual manifold embodiment in **FIG. 1b,** transducer **115,** associated with fill manifold **141,** may be calibrated with respect to atmosphere in a manner as disclosed above by means of a separate shunt valve (not shown) associated either directly with transducer **115** or with the fill manifold **141**. It may be understood that during the calibration process, fill valve **120** and cell valves **125a-N** may be closed. Exhaust manifold **142** may also be in communication with its own transducer **115'** to monitor the pressure within the exhaust manifold. Transducer **115'** may be calibrated with respect to atmosphere in a manner similar to that disclosed above with regards to transducer **115** in **FIG. 1a.** Transducers **115** and **115'** may provide sensor data as well to controller **145.**

In addition, each valve **125a-N** may be in fluid connection with a flow sensor **150a-N** in-line with the connection to its respective cell. Each flow sensor **150a-N** may be associated with a valve **125a-N** or with an inflatable cell. Flow sensors **150a-N** may provide sensor data as well to controller **145.** For example, a flow sensor **150a-N** may be used to monitor that its respective valve **125a-N** is completely open. If a valve is blocked or otherwise impeded, the fluid flow through it may not match an expected flow profile as determined by controller **145.** A flow sensor could provide the controller with data to indicate a fault with the associated valve. The controller may then be programmed to notify a user of the valve flow fault condition. Additionally, the flow sensors may be used to accurately determine the fill/exhaust time for a cell. Based on the data from the flow sensor, the fill/exhaust rate for a cell may be adjusted by controller **145** to control the amount of time required for a fill or exhaust step. A clinician developing a particular therapy protocol may then be able to program a fill or exhaust time as part of the protocol. Such time-based programming may be easier for a clinician to use instead of flow rates and volumes. In addition, the volume of a cell and the fill rate from the flow sensor may allow the controller **145** to detect the presence or absence of a limb in a sleeve or boot incorporating the pressure cells, and may allow the controller the ability to calculate the volume or size of the limb. In one embodiment, a measurement of limb or foot size may be used by the controller for compliance monitoring. In another embodiment, such data may also be used as input to an algorithm for making the compression device more adaptive for different limb sizes

Additionally, a pressure sensor **155a-N** may be associated with each cell to measure the fluid pressure within the cell during its operation. Alternatively, each pressure sensor **155a-N** may be associated with a respective cell valve **125a-N.** The pressure sensors **155a-N** may also provide data to controller **145** so that the controller may be able to control the operation of the compression device. A pressure sensor **155a-N** associated with its respective cell, may provide direct indication of a pressurization or depressurization profile of the cell. Controller **145** may compare an individual cell pressure against a pre-programmed cell pressure profile. If a cell is unable to sustain an expected pressure, a leak condition may be determined. The controller **145** may then be programmed to notify a user of the leak condition.

Although **FIG. 1a** does not explicitly illustrate the use of either flow or pressure sensors between the valves **125a-N** and their respective cells, it may be appreciated that either flow sensors, pressure sensors, or both types of sensors may be included in alternative embodiments. Similarly, although **FIG. 1b** illustrates the use of such sensors, it should be understood that other embodiments may lack either one or both types of sensors.

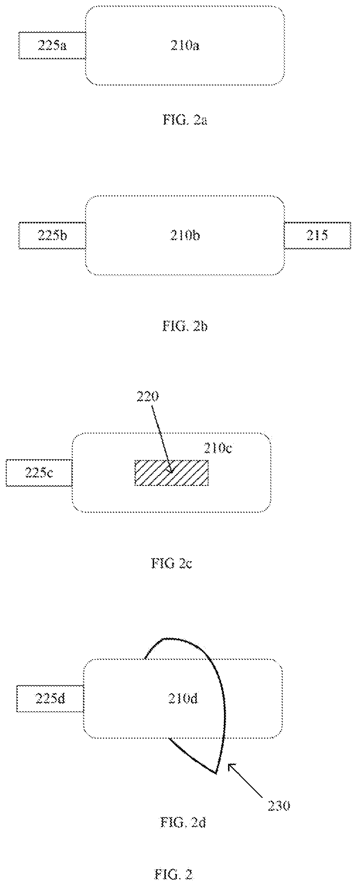

Additional features may be associated with the cells, including, without limitation, volume sensors, inflation sensors, and additional valves. **FIGS. 2a-d** illustrate a number of embodiments of the inflation cells that may be used with the pneumatic compression device. In one embodiment, illustrated in **FIG. 2a,** an inflatable cell **210a** may be in fluid connection with its cell valve **225a.** Cell valve **225a** may be in fluid communication with the manifold **140** as in **FIG. 1a,** or both fill manifold **141** and exhaust manifold **142** as in **FIG. 1b.**

In another example, illustrated in **FIG. 2b,** cell **210b** may have a cell valve **225b** also in fluid communication with the manifold **140** as in **FIG. 1a,** or manifolds **141** and **142** as in **FIG. 1b.** In addition, cell **210b** may have a shunt valve **215** which may be vented to the atmosphere. For example, valve **215** may be used as an emergency release valve in the event that a cell is unable to be exhausted by valve **125** and/or exhaust valve **130.** Valve **215** may be manually operated or automatically operated under control of controller **145.**

As illustrated in **FIG. 2c,** a cell **210c** may have a cell valve **225c** and may also have a strain gage **220** associated with the cell material. Strain gage **220** may be glued or otherwise affixed to the cell, or fabricated as part of the cell, and may be associated with either the inner or outer surface of the cell. The strain gage **220** may be used to measure the deformation of the cell material as it is inflated or deflated, and thereby provide a measure of the volume of fluid within the cell. Although a single strain gage **220** is illustrated, it may be appreciated that multiple strain gages may be associated with each cell to provide accurate data regarding the change in volume or shape of the cell during a therapeutic cycle.

In another example, illustrated in **FIG. 2d,** cell **210d** may be in fluid communication with valve **225d,** permitting the cell to have fluid access to the fill and/or exhaust manifold. Cell **210d** may be fitted with a plethysmograph sensor **230** that may also be used to detect changes in cell shape or volume during a therapeutic cycle. Multiple plethysmograph sensors may be associated with each cell for improved data collection.

Strain gage **220** and plethysmograph sensor **230** may be in data communication with controller **145,** thereby providing a point of control feedback to the controller. Although strain gage **220** and plethysmograph sensor **230** are illustrated in **FIG. 2,** it may be understood that they represent non-limiting examples of sensor systems capable of determining the change in cell shape and/or volume.

The pneumatic compression device may be may be operated to provide a variety of therapeutic protocols. A therapeutic protocol may be defined as a specific sequence of operations to inflate (fill) and deflate (exhaust) one or more cells while they are in contact with a patient. Therapeutic protocols may include, in a non-limiting example, a list of an ordered sequence of cells to be activated, an inflation or deflation pressure threshold value for each cell, an amount of time during cell inflation or deflation, and a phase or lag time between sequential cell activation. In one non-limiting example, the therapeutic protocol may result in the inflation of a plurality of cells substantially simultaneously. In an alternative non-limiting embodiment, the therapeutic protocol may result in the inflation of a plurality of cells in an ordered sequence. It may be understood that an ordered sequence of cells is a sequence of cell inflation over time. In one non-limiting example, the sequentially inflated cells may be physically contiguous in the compression sleeve. In another non-limiting example, the sequentially inflated cells may not be physically contiguous, but may be located in physically separated parts of the compression sleeve. In an additional non-limiting example, the therapeutic protocol may result in stopping the inflation of a plurality of cells substantially simultaneously. In an additional non-limiting example, the therapeutic protocol may result in stopping the inflation of a plurality of cells in an ordered sequence. In some non-limiting examples of a therapeutic protocol, each of a plurality of cells may retain fluid at about the same cell pressure. In some non-limiting examples of a therapeutic protocol, each of a plurality of cells may retain fluid at different pressures. A further non-limiting example of the therapeutic protocol may include deflating a plurality of cells substantially simultaneously. A further non-limiting example of the therapeutic protocol may include deflating a plurality of cells in an ordered sequence. It may be understood that an ordered sequence of cells is a sequence of cell deflation over time. In one non-limiting example, the sequentially deflated cells may be physically contiguous in the compression sleeve. In another non-limiting example, the sequentially deflated cells may not be physically contiguous, but may be located in physically separated parts of the compression sleeve. In yet another non-limiting example of a therapeutic protocol, one of the cells may be inflated and a second cell may be deflated during at least some period of time. As one non-limiting example, one or more cells may be inflated simultaneously as one or more cells are deflated. In another non-limiting example, a first one or more cells may begin inflation and a second one or more cells may begin deflation after the first one or more cells have started inflating. In an alternative non-limiting example, a first one or more cells may begin deflation and a second one or more cells may begin inflation after the first one or more cells have started deflating.

Prior to the start of a therapeutic protocol, an initialization sequence may occur. In one example of an initialization sequence, fill valve **120** may be closed, thereby isolating the compression pump **105** from a manifold (either **140** or **141**), and exhaust valve **130** may be opened to atmosphere **135**. The cell valves **125a-N** may then be opened thereby placing each cell in fluid communication with either the common manifold **140** or exhaust manifold **142** thereby allowing all the cells to be vented to atmosphere. Alternatively, exhaust valve **130** may be opened to vacuum source **110** to permit rapid evacuation of the cells. The controller **145** may determine whether a minimum pressure threshold has been reached based on information received from the transducer **115** (for a common manifold configuration) or from transducer **115'** (for a dual manifold configuration). The controller **145** may also receive sensor data from the cell specific pressure sensors **155a-N.** In one embodiment, when the minimum pressure threshold is reached, the controller **145** may send operation commands to exhaust valve **130** to close. In another embodiment, the controller **145** may also provide operation commands to the cell valves **125a-N** to close. In yet another embodiment, the controller may initiate a therapeutic protocol. It may be appreciated that the initialization sequence may occur while the cells are in contact with the patient, before the cells are affixed onto the patient, or after a protocol has been completed.

A protocol may incorporate one or more cell fill phases. As a non-limiting example of such a fill phase, the following operating sequence may occur. One or more cell valves **125a-N** may be opened along with the fill valve **120** thereby allowing the one or more cells to be in fluid communication with the compression pump **105.** In an embodiment incorporating a common manifold **140,** one or more of the cell valves **125a-N** may open to the common manifold. In an embodiment having independent fill **141** and exhaust **142** manifolds, one or more of the cell valves **125a-N** may be configured to open the cells to communicate with the fill manifold **141** only. In an embodiment, a cell valve, such as **125a,** connected to a cell affixed to a distal portion of the patient, may be opened or remain open to the fill **141**or common **140** manifold for inflation while cell valves associated with more proximal cells are closed to that manifold. The cell (e.g. cell A) connected to the open cell valve (e.g. **125a**) may inflate as a result of being connected to the pressurized fluid from the compression pump **105**. The cell pressure may be monitored by the controller **145** *via* the transducer **115,** a pressure sensor **155a** associated specifically with that cell, or by both.

In an example, the amount of pressure sensed by the transducer **115** may differ from the cell pressure at a particular cell. For example, pressure losses may occur between the transducer **115** and a cell. Accordingly, the controller **145** may access a lookup table to determine the threshold at which the pressure sensed by the transducer **115** is appropriate to close the cell valve **125a-N** corresponding to the cell.

In another example of a fill phase, an opened cell valve, such as **125a,** may be modulated to control the fill rate of the corresponding cell. The opened cell valve may be modulated based on time and/or pressure. For example, a cell valve that is being modulated on a time basis may be opened for a first period of time and closed for a second period of time as the cell is inflating. Alternately, a cell valve that is being modulated on a pressure basis may be opened while the cell pressure increases and closed for a period of time during the inflation cycle. The pressure increase may be determined by measuring an initial cell pressure before opening the cell valve and the cell pressure as the cell valve is open. When the difference between the initial cell pressure and the inflating cell pressure is substantially equal to a specific value, the cell valve may be closed. The duty cycle at which the cell valve is modulated may be any value and may be specifically programmed by a user or clinician. The controller **145** may determine when to open and close the cell valve. For pressure-based modulation, any one or more of transducer **115** or cell specific pressure sensors **155** may provide pressure data to the controller **145** to assist in determining when to open and/or close the cell valve during modulation.

Modulation may be performed to ensure that the cell pressure does not increase too quickly for a given protocol. For example, a lymphedema patient may be treated with a protocol requiring slowly inflating and deflating cells. Alternatively, an arterial patient may require a protocol capable of rapid inflation and deflation cycles. Moreover, cells may be of varying size. For example, cells in a device designed for a child may be smaller than cells in a device designed for an adult. However, the compression pump **105** may have a relatively fixed flow rate. As such, modulation may be used to ensure that cell inflation is performed at a proper rate.

In an alternate embodiment, a cell valve, such as **125a,** may include a variable aperture, which may be used to restrict the rate at which the pressure increases in the corresponding cell. A flow sensor such as **150a** may monitor the fluid flow rate into the cell. The data from the flow sensor may be provided to controller **145** so that the controller may be able to adjust the aperture in the cell valve. In another embodiment, a cell valve such as **125a** may incorporate a one-way valve. For example, if valve **125a** is opened to allow cell A to be filled by common manifold **140** or fill manifold **141,** and then valve **125b** is opened to allow cell B to be pressurized, a one-way valve incorporated in valve **125a** will prevent transient depressurization of cell A when valve **125b** is opened to initially evacuated cell B. In another alternate embodiment, a compression pump **105** that operates with a variable flow rate may be used. Additional methods of modulating pressure may also be performed and will be apparent to one of ordinary skill in the art based on this disclosure.

When the cell reaches an appropriate pressure threshold value incorporated as a part of a therapeutic protocol, the controller **145** may close the cell valve **125a** corresponding to the cell.

A protocol may also incorporate one or more cell exhaust phases. As a non-limiting example of such an exhaust phase, the following operating sequence may occur. One or more cell valves **125a-N** may be opened along with the exhaust valve **130** thereby allowing the one or more cells to be in fluid communication with either the vacuum source **110,** or the atmosphere **135.** In an embodiment incorporating a common manifold **140,** one or more of the cell valves **125a-N** may open to the common manifold. In an embodiment having independent fill **141** and exhaust **142** manifolds, the one or more cell valves **125a-N** may be configured to open the cells to communicate with the exhaust manifold **142** only. In an embodiment, a cell valve, such as **125a,** connected to a cell affixed to a distal portion of the patient, may be opened or remain open to the exhaust **142** or common **140** manifold for deflation while cell valves associated with more proximal cells are closed to that manifold. The cell (e.g. cell A) connected to the open cell valve (e.g. **125a**) may deflate as a result of being connected to the vacuum source **110** or atmosphere **135.** The cell pressure may be monitored by the controller **145** *via* transducer **115** for a common manifold configurations or transducer **115'** for independent manifold configurations, a pressure sensor **155a** associated specifically with that cell, or by both.

In an example, the amount of pressure sensed by the transducer **115** or transducer **115'** may differ from the cell pressure at a particular cell. For example, pressure losses may occur between the transducer **115** (or **115'**) and a cell. Accordingly, the controller **145** may access a lookup table to determine the threshold at which the pressure sensed by the transducer **115** (or **115'**) is appropriate to close the cell valve **125a-N** corresponding to the cell.

Exemplary for an exhaust phase, an opened cell valve, such as **125a,** may be modulated to control the exhaust rate of the corresponding cell. The opened cell valve may be modulated based on time and/or pressure. For example, a cell valve that is being modulated on a time basis may be opened for a first period of time and closed for a second period of time as the cell is deflating. Alternately, a cell valve that is being modulated on a pressure basis may be opened while the cell pressure decreases and closed for a period of time during the exhaust cycle. The pressure decrease may be determined by measuring an initial cell pressure before opening the cell valve and the deflated cell pressure as the cell valve is open. When the difference between the initial cell pressure and the cell pressure is substantially equal to a specific value, the cell valve may be closed. The duty cycle at which the cell valve is modulated may be any value and may be specifically programmed by a user or clinician. The controller **145** may determine when to open and close the cell valve. For pressure-based modulation, any one or more of transducers **115, 115',** or cell specific pressure sensors **155** may provide pressure data to the controller **145** to assist in determining when to open and/or close the cell valve during modulation.

Modulation during inflation may be performed to ensure that the cell pressure does not decrease too quickly, which could cause a reverse gradient. While a typical pressure gradient may result in distal cells having a greater pressure than proximal cells, a reverse gradient may result in proximal cells having a greater pressure than distal cells. Reverse gradients are frequently considered undesirable, although some therapeutic protocols may make use of them. Moreover, cells may be of varying size. For example, cells in a device designed for a child may be smaller than cells in a device designed for an adult. However, the vacuum source **110** may have a relatively fixed flow rate, and venting to atmosphere **135** may occur due to unregulated, passive exhaust. As such, modulation may be used to ensure that cell deflation is performed at a proper rate.

In an alternate embodiment, a cell valve, such as **125a,** may include a variable aperture, which may be used to restrict the rate at which the pressure decreases in the corresponding cell. A flow sensor such as **150a** may monitor the fluid flow rate into the cell. The data from the flow sensor may be provided to controller **145** so that the controller may be able to adjust the aperture in the cell valve. In another embodiment, a cell valve such as **125a** may incorporate a one-way valve. For example, if valve **125a** is opened to allow cell A to be evacuated by exhaust manifold **142,** and then valve **125b** is opened to allow cell B to be evacuated, a one-way valve incorporated in valve **125a** will prevent transient re-pressurization of cell A when valve **125b** is opened to previously pressurized cell B. In another alternate embodiment, a vacuum source **110** that operates with a variable flow rate may be used. Additional methods of modulating pressure may also be performed and will be apparent to one of ordinary skill in the art based on this disclosure.

When the cell reaches an appropriate pressure threshold incorporated as a part of a therapeutic protocol, the controller **145** may close the cell valve **125a** corresponding to the cell.

It may be appreciated that a therapeutic protocol may be composed of any variety of sequences of cell inflation and deflation steps. Cells may be inflated and deflated in a specific order, and multiple cells may be inflated or deflated either in synchrony or in a staggered fashion. The cells may be held at a particular inflation or deflation pressure for a specific amount of time. In addition, a specific protocol may be repeated with some lag time between repeats. Alternatively, a first protocol may be followed by a second and different protocol.

In one example of a protocol, a plurality of cell valves **125a-N** may be opened simultaneously to inflate the plurality of respective cells simultaneously. As the pressure in each cell surpasses a corresponding threshold, the controller **145** may close the cell valve **125a-N** for the cell. The pressure thresholds for all the cells may be identical or they may differ. For example, the pressure threshold for a cell at a distal position on a patient may be higher than a cell more proximally located. As a result, a pressure gradient may be developed by the cells from a greater pressure at the distal point, to a lesser pressure at the proximal point. The cells may then be deflated simultaneously until they all reach an ambient pressure. Alternatively, only selected cells may be deflated.

In an another example of a protocol, the cell valves **125a-N** may not be opened simultaneously when the cells are deflated, but rather may be opened in a staggered fashion. In an embodiment based on the common manifold configuration, fill valve **120** may be closed, and exhaust valve **130** may be opened to either the vacuum source **110** or to atmosphere **135**. A first cell valve, such as **125a,** may be opened to release the pressure in the corresponding cell. After a short period of time elapses, a second cell valve, such as **125b,** may be opened to release the pressure in the corresponding cell. Such a delay time between the deflation of successive cells, may be about 1 second long or longer. In an alternative non-limiting example, the controller **145** may cause a cell valve, such as **125a** or **125b,** to release the pressure in the corresponding cell in response to the controller receiving data from a corresponding cell sensor, such as a pressure sensor **155a** or **155b**. The controller **145** may cause the pressure in a cell to be released then the sensor data has achieved a therapeutic protocol defined threshold value, such as a maximum pressure. The process may be repeated until each cell valve **125a-N** has been opened.

In an example of a protocol using modulation, a plurality of cell valves **125a-N** may be modulated simultaneously. At any given time, one or more cell valves may be opened and/or closed according to a modulation schedule. For example, for a time-based modulation scheme having a 50% duty cycle, half of the cell valves **125a-N** may be open and half of the cell valves may be closed at any time.

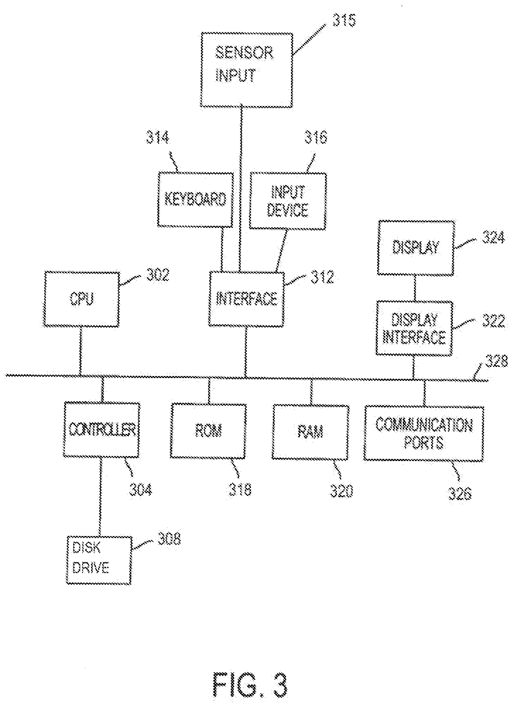

**FIG. 3** is a block diagram of an embodiment of hardware that may be used to contain or implement program instructions for controller **145**. Some or all of the below-described hardware may be incorporated in the controller **145**. Referring to **FIG. 3,** a bus **328** may serve as the main information highway interconnecting the other illustrated components of the hardware. CPU **302** or other computing device is the central processing unit of the system, performing calculations and logic operations required to execute a program. Read only memory (ROM) **318** is one embodiment of a static memory device and random access memory (RAM) **320** is one embodiment of a dynamic memory device.

A controller **304** may interface the system bus **328** with one or more optional disk drives **308**. These disk drives may include, for example, external or internal DVD drives, CD ROM drives, or hard drives. Such drives may also be used as non-transitory computer-readable storage devices.

Program instructions may be stored in the ROM **318** and/or the RAM **320**. Optionally, program instructions may be stored on a computer readable medium such as a compact disk or a digital disk or other recording medium, or received by means of a communications signal or a carrier wave. Such program instructions may include a library of pre-loaded therapeutic protocols. Non-limiting examples of such program instructions may cause the controller to receive an input related to one or more therapeutic protocols from an input device, place at least two of the plurality of valves into the first state for a period of time based at least in part on the one or more therapeutic protocols, receive cell sensor data from at least one cell sensor, and transmit, to the output device, an output related to the data from at least one cell sensor. Additional instructions may cause the computing device to place at least two of the plurality of valves in one of the first state and the third state for a period of time based at least in part on data received from at least one cell sensor in operable communication with each of the at least two valves. Additional instructions may cause the computing device to place at least two of the plurality of valves in the first state substantially simultaneously or in an ordered sequence. Further instructions may cause the computing device to place the at least two of the plurality of valves in the third state, either substantially simultaneously or in an ordered sequence. Various instructions may be directed towards receiving sensor data, for example from pressure or flow sensors associated with the valves, and comparing them against appropriate threshold values as included in the therapeutic protocol. Similar instructions may be directed towards placing any of the valves into any of the possible cell states based on the sensor data values and threshold values according the therapeutic protocol.

An optional display interface **322** may permit information from the bus **328** to be displayed on the display **324** in audio, graphic or alphanumeric format. Communication with external devices may occur using various communication ports **326**. For example, communication with the fill valve **120,** exhaust valve **130,** and/or the cell valves **125a-N** may occur via one or more communication ports **326**. Controller **145** may also provide command data over communication ports **326** to valves **120, 130,** and **125a-N** to direct their respective operations.

In addition to the components disclosed above, the hardware may also include an interface **312** which allows for receipt of data from input devices such as a keyboard **314** or other input device **316** such as a mouse, remote control, pointing device, and/or joystick. Such input devices may allow a user to choose a pre-programmed therapeutic protocol from a library of such protocols maintained by the controller, enter parameters into a preprogrammed protocol, or enter a new therapeutic protocol into the controller. In addition, transducers **115** and **115',** pressure sensors **155a-N,** flow sensors **150a-N,** as well as sensors communicating data related to the change in shape or volume of the cells, such as a strain gage **220** and/or a plethysmograph **230,** may communicate sensor input **315** through interface **312** to bus **328**.

In an embodiment, the controller **145** may store and/or determine settings specific to each cell. For example, the controller **145** may determine one or more pressure thresholds for each cell. Moreover, the controller **145** may prevent the pneumatic compression device from being used improperly by enforcing requirements upon the system. For example, the controller **145** may be programmed so that distal cells in a therapeutic protocol are required to have higher pressure thresholds than proximal cells. The controller may override instructions received from a user via the user interface that do not conform to such pressure threshold requirements. In an embodiment, the pressure thresholds of one or more cells may be adjusted to meet the pressure threshold constraints.

In a further embodiment, controller **145** may provide a compression device user with an interface to permit the user to program the control to provide a variety of therapeutic protocols for patients. The interface may be displayed on the control display, such as a flat panel display. Input devices such as a mouse, keypad, or stylus may be used by the user to provide data to define a particular therapeutic protocol. The controller may record the protocols on a memory or disk device for future use. In one embodiment of the controller, a user may be presented with a list of previously stored therapeutic protocols from which to choose for a particular patient. In another embodiment, a user may define a therapeutic protocol for a patient on an as-needed basis. In another embodiment, a user may choose a stored protocol and modify it. It may be appreciated that such programming may be accomplished through any of a variety of methods. In one non-limiting example, a therapist or other health care professional may enter commands and/or parameters via a keyboard. In another non-limiting example, the therapist or other health care professional may use a mouse or touch screen to select one or more pre-programmed therapeutic protocols or parameters from a menu. In yet another non-limiting example, the therapist or other health care professional may program a protocol with help of a graphical interface presenting therapeutic protocol "primitives." The user may define a therapeutic protocol by selecting a group of graphical primitives representing cells, valves, sensors, and the like, and link them together to form a complete protocol. As one non-limiting example, a final graphical presentation of a therapeutic protocol may be presented on an output device as a flow-chart listing steps, cell inflation order, time between cell inflations/deflations, cell pressure hold parameters, and/or fluid flow rate or pressure thresholds.

In addition to storing protocols, the controller **145** may also record sensor readings obtained during a particular therapy session. Sensor readings may include, without limitation, cell pressures, cell volumes, cell inflation data, and/or air or vacuum air flow values. The controller may also record patient related data such as blood pressure or blood oxygen saturation levels measured during a therapeutic session, as well as a date and time for the session. The controller may also record therapy notes entered by the user.

Although not illustrated in **FIG. 3,** controller **145** may also include a number of communications interfaces to either a network or a wireless device such as a cell phone, an iPad, a local area network device, and/or a wide area network device. Such communication interfaces may permit the controller to be monitored remotely by a clinician to obtain performance data or patient compliance data. Such communication interfaces may also permit a remote clinician to program the controller. As one non-limiting example, a physician or technologist may program a new therapeutic protocol in the controller. Alternatively, the care provider may transmit parameter data for a preprogrammed therapeutic protocol, or select a pre-programed therapeutic protocol in the controller. In one embodiment, a cell phone may have an application that may bring up a user-friendly programming interface to permit ease of reprogramming. Alternatively, a remote computer may display a web-enabled display for programming, data assessment, and/or analysis.

The controller may further comprise storage devices that may be fixed (such as a hard drive) or removable, such as a removable disc, a removable card, and a removable memory chip.

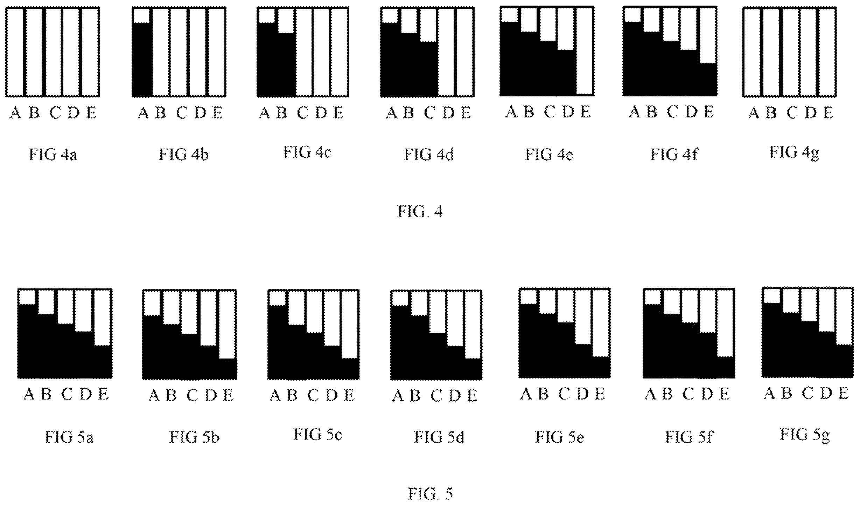

A number of possible examples of therapeutic protocols are illustrated schematically in **FIGS. 4-9.**

An example of a sequential gradient protocol is illustrated in **FIG 4,** in which the cells A-E may be arranged distally to proximally on a limb, such as a leg. Initially, all cells A-E may be deflated, **FIG 4a.** Subsequently, each cell in an ordered sequence may be inflated to a set pressure in an inflation cycle. Thus, cell A may be inflated to a first pressure such as to 60 mmHg, as in **FIG 4b,** cell B may be inflated to a second pressure (e.g. 50 mmHg) in **FIG. 4c,** cell C may be subsequently inflated to a lower pressure, such as to 40 mmHg, (**FIG. 4d**) followed by cell D (to 30 mmHg, **FIG. 4e**) and cell E (to 20 mmHg, **FIG 4f**). It may be understood that a successive cell may begin inflation immediately after its preceding cell has been inflated, or there may be a phase delay after a preceding cell has been inflated before the successive cell begins to inflate. In the inflation sequence, the phase delays for each cell may be the same, or different cells may have different phase delays associated with them. The therapeutic protocol may include such phase delay information as part of its parameters. After the entire set of cells has been inflated, they may be simultaneously deflated as illustrated in **FIG 4g.** The protocol may be repeated as necessary with some rest period between inflation cycles. The cell pressures may be essentially repeated from one cycle to another. Alternatively, a cycle may cause the cells to inflate to a different pressure gradient, such as 70, 60, 50, 40, and 30 mmHg for cells A-E, respectively. It may be appreciated that the final inflation pressure of each cell may differ from all the remaining cells, or all cells may reach essentially the same pressure.

Another example of a sequential inflation cycle is illustrated in **FIG. 5. FIG 5a** may represent the inflation state of a group of cells after a gradient inflation protocol, as illustrated in **FIG 4f.** Thereafter, the pressure in all the cells may be reduced by some amount; the resulting cell pressure in each cell may be less than at the start of the protocol, but all the cells may retain some pressure, as in **FIG 5b.** Thereafter, each cell in succession may be re-pressurized (**FIGS. 5c-5f**) until all the cells are re-pressurized to their initial state at the beginning of the protocol, **FIG 5g.** Cells may be deflated simultaneously or in an ordered sequence. In the case of sequential deflation, it may be understood that a successive cell may begin deflation immediately after its preceding cell has been deflated, or there may be a phase delay after a preceding cell has been deflated before the successive cell begins to deflate. In the deflation sequence, the phase delays for each cell may be the same, or different cells may have different phase delays associated with them. The therapeutic protocol may include such phase delay information as part of its parameters.

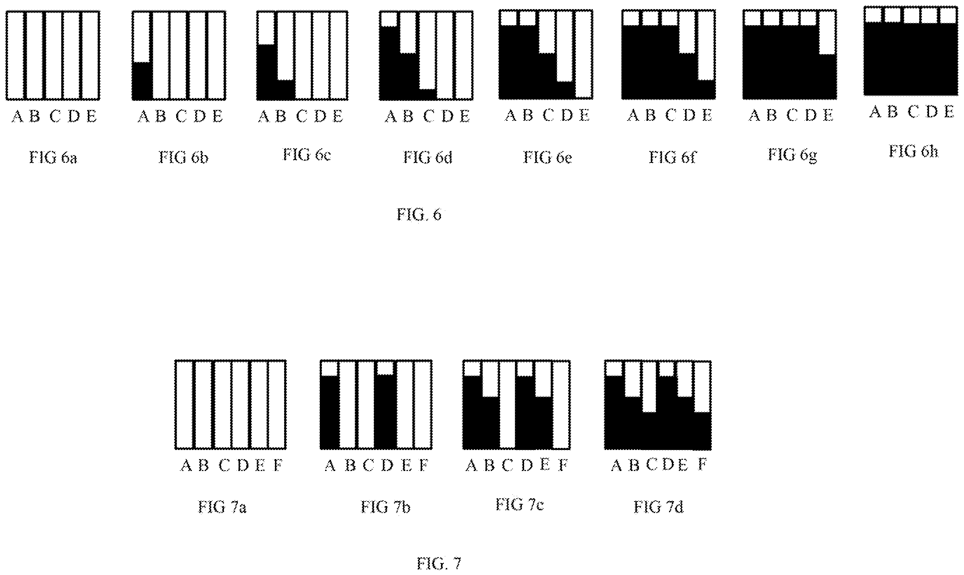

**FIG. 6** illustrates another example of a rapid toggle protocol. Initially, all the cells may be deflated in as **FIG. 6a.** Thereafter, cell A may begin inflating to some pressure, **FIG. 6b.** Cell A may continue to inflate, but cell B may begin to inflate after cell A reaches a threshold pressure (**FIG. 6c**). As illustrated in **FIG. 6d,** cell A may continue pressurizing to some final value. Meanwhile, as cell B pressurizes past a threshold value, cell C may then begin to inflate. The sequence may continue (**FIGS. 6e-6g**), in which a cell begins to inflate when a preceding cell inflates to a particular pressure threshold. It is understood that the thresholds for all the cells may be essentially the same. Alternatively, one or more cells may have different thresholds. In one embodiment, the thresholds may be programmed by a therapist operating the compression therapy device. In another embodiment, a user or patient receiving the compression therapy may program the thresholds. In addition, although **FIG. 6** illustrates that the final pressures attained by all the cells are effectively identical, it may be appreciated that the final pressures attained by the cells may form a pressure gradient as illustrated in **FIG. 4f.**

**FIG. 7** illustrates yet another therapeutic protocol. In this protocol, an even number of cells may be employed. When the protocol begins, all the cells may be in a deflated state (**FIG. 7a**). Thereafter, a pair of cells, such as cells A and D may inflate simultaneously (**FIG 7b**) until they reach their final pressures. The next cells, B and E, may then be inflated (**FIG 7c**) until they reach their final pressures. Thereafter, the final cells, D and F may be inflated (**FIG 7d**). It may be appreciated that cells B and E may begin to inflate before cells A and D finish inflating, and similarly cells C and F may begin their inflation cycle before cells B and E attain their final pressures. After the protocol is completed (**FIG 7d**) all the cells may deflate simultaneously, or in some other order as required.

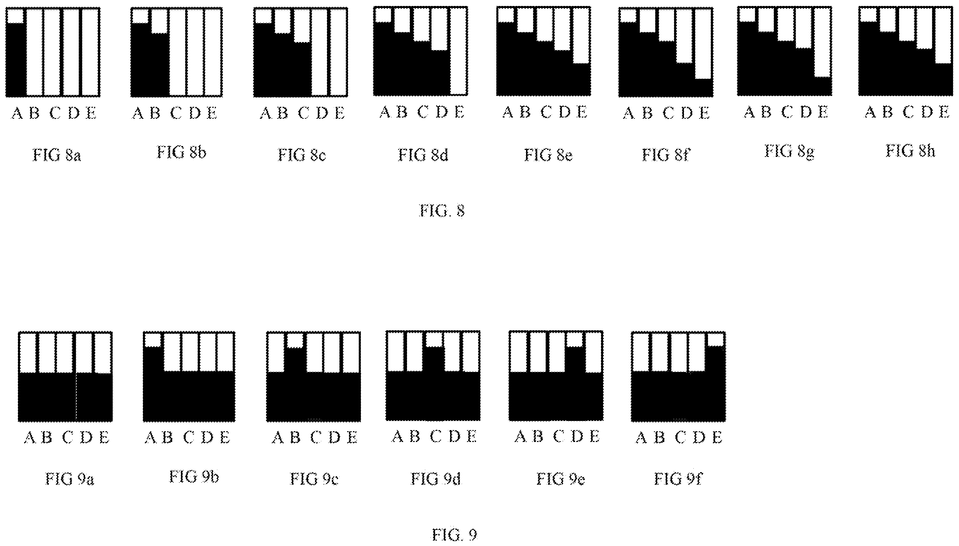

In another example of a therapeutic protocol, **FIG. 8** illustrates what may be termed a "milking" protocol. **FIGS. 8a-8e** illustrate a gradient inflation protocol similar to that illustrated in **FIGS. 4b-4f.** Instead of deflating all cells as in **FIG. 4g,** the protocol may allow cells A, B, and C to retain their pressures, while only cells D and E partially deflate to lower pressures (**FIG 8f**). Thereafter, in sequence, cell D (**FIG. 8g**) and E (**FIG. 8h**) may re-inflate to their previous pressures (**FIG. 8h**). The protocol may then repeat the steps illustrated in **FIGS 8f-h.**

In yet another example of a therapeutic protocol, the cells may inflate in a "wave" motion (**FIG. 9**). In one simple protocol, the cells may be partially inflated to some pressure (**FIG 9a**). Although all cells are represented as having about the same pressure, it may be appreciated that the cells may be initially inflated into a gradient as illustrated in **FIG. 8e.** Thereafter, one cell at a time may be increased in pressure, Cell A (distal) through cell E (proximal) according to the sequence in **FIGS. 9b-9f.** Although the protocol illustrated in **FIG 9** illustrates a single cell inflating at a time, it is understood that a more effective therapy may include inflating a more proximal cell while its neighboring more distal cell is inflated, and then deflating the distal neighbor after the proximal cell is fully inflated. As an example, after cell A is fully inflated (**FIG. 9b**), cell B may be inflated. Thereafter, after cell B has been inflated, cell A may be deflated back to its prior pressure resulting in the state illustrated in **FIG. 9c.**

It may be understood that the protocols illustrated in **FIGS. 4-9** represent a few examples of possible inflation/deflation protocols. Other protocols may include more or fewer cells, and a variety of sequences of inflation and deflation.

More complex therapeutic protocols may include feedback from the individual cells to the controller **145** before, during, and/or after inflation or deflation. In one non-limiting example, the controller **145** may monitor the pressure of a cell after it has stopped inflating or deflating to assure the cell pressure is maintained while the cell is in a hold state (neither inflating nor deflating). Thus, the pressure measured by a pressure sensor **155a** associated with a first cell may change due to effects on the tissue brought about by the inflation of a neighboring cell. The controller **145** may respond to the change in pressure in the first cell by activating its associated valve **125a** to adjust the first cell pressure to a desired value.

In another protocol, the controller **145** may retain or have access to logs associated with the patient's medical history over time. Such historical data may be used by the controller **145** or a health care professional to modify a protocol to account for a change in the patient's status. As one non-limiting example, the controller **145** may alter a patient's usual therapeutic protocol if the long term patient status - as recorded in the patient logs - indicates an improvement over time. Alternatively, if the patient does not improve, the controller **145** may alter the usual patient's protocol in an attempt to improve its effectiveness. A health care provider may also be presented with such long term status information along with a recommendation for a protocol change by the controller **145.** The health care provider may then accept the recommendation by the controller **145,** or may make additional modifications.

In one non-limiting embodiment, the pneumatic compression device may be portable. In an embodiment, the pneumatic compression device may include a user interface that enables the user to interact with the controller **145.** For example, the user interface may include a display and one or more input devices, such as a keypad, a keyboard, a mouse, a trackball, a light source and light sensor, a touch screen interface and/or the like. The one or more input devices may be used to provide information to the controller **145,** which may use the information to determine how to control the fill valve **120,** exhaust valve **130,** and/or the cell valves **125a-N.**

As disclosed above, a therapeutic protocol may specify a sequence of inflation times and pressures for a number of inflatable cells comprising an appliance used with a compression therapy device. The pressure desired in each cell during a protocol may be determined by a health care provider in order to optimize fluid flow through the patient's tissues. It may be appreciated that a compression therapy device may be so designed as to meet, in a repeatable fashion, the set target pressures for each cell during a therapeutic protocol.

Cell pressures may be monitored in a number of ways. In one non-limiting embodiment, cell pressure may be calculated by a fluid flow rate, a time for fluid flow, and the volume of the cell. In a second non-limiting embodiment, cell pressure may be inferred by a pressure sensor associated with a fill manifold while a cell is in fluid communication with the fill manifold. Such a method may be based on pressure equalization between the fill manifold and the cell while the cell is being filled by the fluid. In a third non-limiting embodiment, a pressure sensor may measure directly a pressure associated with a cell.

Cell pressures may be monitored during a therapeutic protocol while the cells are inflated or deflated. The relationship between the pressure of a cell during inflation (a dynamic pressure measurement) and the final pressure required by a therapeutic protocol after the cell has been pressurized to a stable pressure (a static pressure measurement) may be determined by a calibration method. In one non-limiting embodiment, the calibration method may include pre-calibrating the appliance and each of the independently inflatable cells therein at a fabrication or supply location prior to providing the appliance to the patient. A second non-limiting embodiment may include an auto-calibration function built into the pneumatic compression device for use with any appliance provided for the compression therapy.

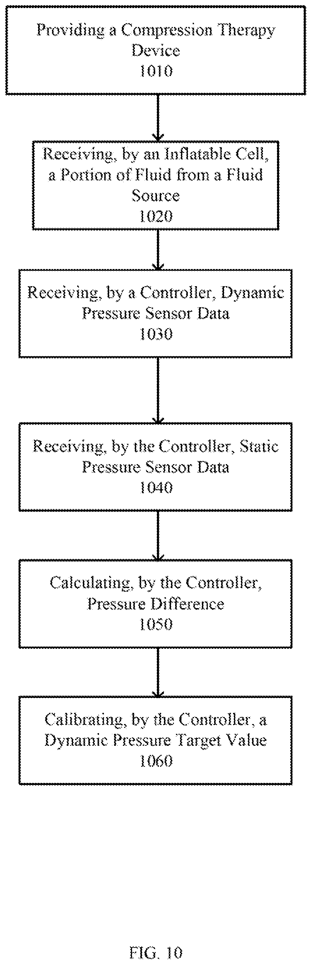

**FIG. 10** presents a flow chart of one non-limiting example of a method to auto-calibrate a compression therapy device. A compression therapy device may be provided **1010** for auto-calibration. Such a device may comprise an appliance or inflatable compression sleeve comprising at least one inflatable cell. The device may further comprise a fluid source having a source output and configured to introduce a fluid into the inflatable cell, a fill manifold configurable to be in fluid communication with the fluid source and the inflatable cell, a cell valve disposed between the inflatable cell and the fill manifold, a pressure sensor, and a controller. The controller may be configured to receive pressure sensor data from the pressure sensor and to control one or more actions of the cell valve. The controller may further comprise at least one processor device, at least one non-transitory and at least one memory storage device.

The inflatable cell may receive **1020** some portion of the inflation fluid from the fluid source. The pressure sensor may determine a pressure associated with a dynamic pressure of the cell while the cell is filling. The controller may receive **1030** the dynamic pressure sensor data provided by the pressure sensor at least once during the cell filling cycle. After the cell has received the portion of inflation fluid, and the inflation cycle has ceased, the pressure sensor may determine a pressure associated with a static pressure of the cell and the controller may receive **1040** the static pressure sensor data provided by the pressure sensor. The controller may calculate **1050** a difference between the dynamic pressure sensor data and the static pressure data. The controller may calibrate **1060** a dynamic pressure sensor target value based, at least in part, on one or more of a static pressure sensor target value, the dynamic pressure sensor data, the static pressure sensor data, and the pressure difference. The static pressure sensor target value may represent a desired inflatable cell pressure as defined by a therapeutic protocol. The dynamic pressure sensor target value may be used by the controller to determine when a dynamically inflated cell may have achieved a pressure close to the desired static pressure target.

The dynamic pressure sensor target value may be stored in at least one non-transitory memory storage device of the controller. Additionally, the controller may provide the dynamic pressure sensor target value to a device in communication with the controller. Non-limiting examples of such devices may include a remote computer terminal, a smart phone, a tablet computer, a server, or other computing device. It may be understood that the calibration method, as disclosed above, may be used to determine a dynamic pressure sensor target value associated with more than one static pressure target values for the cell. Thus, a first dynamic pressure sensor target value for a cell may be determined for a static pressure of about 5.3 kPa, and a second dynamic pressure sensor target value for the cell may be determine for a static pressure of about 8 kPa. Each of these dynamic pressure sensor target values may be stored in non-transitory memory or transmitted to devices in communication with the controller. In one non-limiting example, the controller may store a static pressure target value and its related dynamic pressure target value in a table. The values in the table may be used during non-calibration (for example, therapeutic) uses of the therapeutic device to determine a dynamic pressure corresponding to a target therapeutic protocol pressure for a cell.

The controller may also provide a warning indicator that is activated when a difference value exceeds a threshold value. The warning indicator may be useful to monitor the function of the fluid source, or the state of the valve and/or cell. Over time, the performance of the fluid source may degrade, and provide less fluid than when the source was new.

Additionally, the warning indicator may be used to indicate a malfunctioning or plugged valve or manifold. The warning indicator may further indicate a degradation of the cell construction, such as the appearance of leaks in the cell, or the cell material becoming stretched due to over-use. The controller may retain calibration data - including static pressure values, dynamic pressure values, pressure differences, and calculated dynamic pressure sensor target values - over time in a calibration log. The controller may review the data in such a calibration log at each use or additional calibration. If the pressure difference value exceeds a threshold, the controller may notify a user that the value of the calculated dynamic pressure sensor target value may be in question. The user, upon receiving the warning indicator, may then choose to change or service the fluid source, replace valves, or replace the appliance. The warning indicator may include any type of indicator, including, but not limited to, an optical indicator, an audible indicator, a text indicator displayed on a readable output device (such as a computer monitor, laptop display, or text message to a smart phone) in data communication with the controller, and a graphical indicator on a viewable output device in data communication with the controller.

Refinements of the basic auto-calibration method disclosed above may also be considered. For example, the auto-calibration method may begin as disclosed above. A fluid source may deliver a first portion of fluid to a cell, the controller may receive a first dynamic pressure measurement, the source may stop delivering the fluid to the cell, and the controller may receive a first static pressure measurement. The controller may determine a first difference value and calculate a first dynamic target pressure value corresponding to a static target pressure value. The controller may cause the fluid source to deliver a second portion of fluid to the cell, the controller may receive a second dynamic pressure measurement, the source may stop delivering the fluid to the cell, and the controller may receive a second static pressure measurement. The controller may determine a second difference value and calculate a second dynamic pressure target value corresponding to the static target pressure value.

It may be appreciated that the compression device may run any number of series of such calibration steps, with a cell partially inflated at each series. In one non-limiting embodiment, the controller may store in non-transitory memory each of the dynamic pressure target values calculated for a specific static pressure target value. Additionally, the controller may calculate and store in non-transitory memory a final dynamic pressure sensor target value based at least in part, on one or more of any of the static pressure values, dynamic pressure values, differences, dynamic pressure target values, and static pressure target value obtained during one or more calibration steps. In one non-limiting example, the final dynamic pressure sensor target value may be calculated as an average of the multiple calculated dynamic pressure target values. In another non-limiting example, the final dynamic pressure sensor target value may be calculated as a weighted average of the multiple calculated dynamic pressure target values.

Although the non-limiting method for calibration disclosed above is described in terms of a single inflatable cell, similar methods may be used to calibrate dynamic pressure sensor target values for each of a plurality of inflatable cells that may comprise the inflatable compression article or sleeve. The multiple cells may be independently inflatable, and may be inflated sequentially, concurrently, or one or more cells may be inflated starting at a time after one or more additional cells have begun to inflate. Each cell of the plurality of cells may be configurable to be in fluid communication with the fill manifold, and a separate cell valve may be associated with each of the plurality of cells. The cell valves may be disposed between their respective cells and the fill manifold, and the actions of each valve may be independently controlled by the controller.

It may be understood that each independently inflatable cell may be independently calibrated. One cell may be calibrated while one or more additional cells may be inflated, deflated, or maintained at a constant pressure. For example, the fluid source may introduce a portion of fluid into a first cell, and the fluid source may introduce a second portion of fluid into a second cell. Alternatively, a fluid source may introduce a second portion of fluid into a second cell while a first cell no longer receives a first portion of fluid for inflation. In still another embodiment, a fluid source may introduce a second portion of fluid into a second cell while a pressure sensor measures a dynamic sensor pressure value or a static pressure value of a first cell, or transmits such data to the controller.

Although a single measurement of the dynamic pressure and static pressure are disclosed above, it may be understood that multiple consecutive measurements may be made to obtain greater statistical accuracy. For example, successively measured static pressure values may be averaged together and successively measured dynamic pressure values may be averaged together. Averages, measures of variability of the pressure measurements, and additional statistical metrics may be calculated for the dynamic pressure value and the static pressure value.

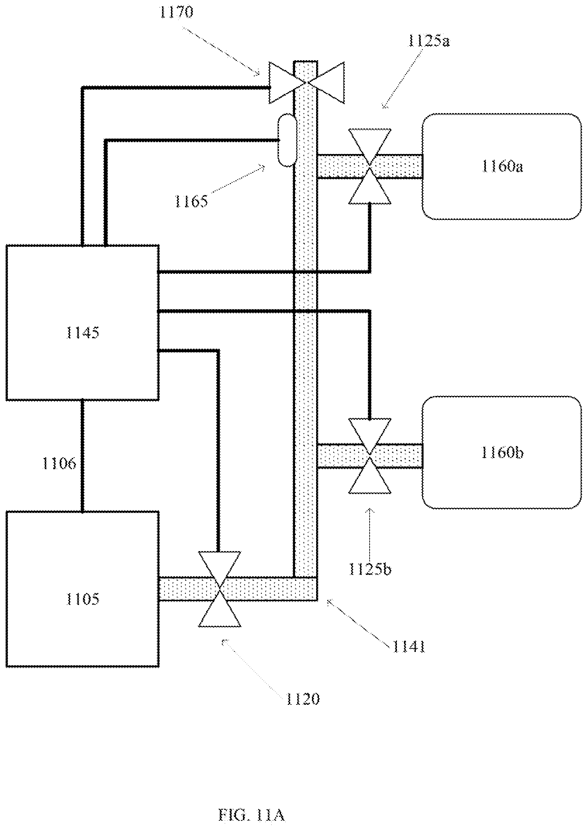

**FIGS. 11A-11C** depict some non-limiting examples of compression therapy systems to which the auto-calibration method may apply. It should be noted that elements having the same number in each of **FIGS 11A-11C** have the same function although the elements may have different structures depending on the configuration of the system depicted.

**FIG. 11A** depicts one embodiment of a system for providing compression therapy to a patient. The system includes a fluid source **1105,** which may be any type of compression or pumping device. The fluid source **1105** may deliver the fluid into a fill manifold **1141** through a source outlet, and the source outlet may be isolated from the fill manifold by means of a fill valve **1120.** The fill manifold **1141** may deliver the fluid to one or more independently inflatable cells **1160a** and **1160b.** Each cell **1160a, 1160b** may be isolated from the manifold by means of a cell valve **1125a** and **1125b,** in which one cell valve is associated with one cell (for example, cell valve **1125a** may be associated with cell **1160a,** and cell valve **1125b** may be associated with cell **1160b**). When the fluid source **1105** delivers fluid into the fill manifold **1141,** pressure within the fill manifold may be measured by a pressure sensor **1165.** In one non-limiting example, the fill manifold **1141** may also be configured to deliver fluid to a low pressure source such as to the atmosphere or a source of vacuum. The fill manifold **1141** may be isolated from the low pressure source by means of an exhaust valve **1170.** In the configuration depicted in **FIG. 11A,** cells **1160a,b** may be inflated when fill valve **1120** is configured to permit the fluid source **1105** to source fluid into the fill manifold **1141** while the exhaust valve **1170** is closed and the one or more cell valves **1125a,b** are open. Fluid in cells **1160a,b** may be removed by closing fill valve **1120** and opening exhaust valve **1170** while cell valve **1125a,b** are open. Controller **1145** may be configured to control the fill valve **1120,** exhaust valve **1170,** cell valves **1160a,b,** and the fluid source **1105.**

Cell **1160a** may be calibrated in the configuration depicted in **FIG. 11A** by the following non-limiting method. A patient may get a compression appliance comprising one or more individually inflatable cells **1160a,b** over a body part to receive the compression therapy. Controller **1145** may cause the fluid source **1105** to provide fluid into the fill manifold **1141** by enabling the fluid source over a control line **1106,** opening the fill valve **1120,** and closing exhaust valve **1170.** Cell **1160a** may be placed in fluid connection with the fill manifold **1141** by the controller **1145** opening cell valve **1125a.** While cell **1160a** is inflated, controller **1145** may receive dynamic pressure data from pressure sensor **1165.** The dynamic pressure data may represent the dynamic pressure within the fill manifold **1141,** and therefore, by extension, the dynamic pressure of the cell **1160a** in fluid communication therewith. The controller **1145** may cause the source of the fluid **1105** to cease emitting the fluid into the fill manifold **1141** by disabling the source via a control signal over the control line **1106.** The controller **1145** may receive a static pressure value from the pressure sensor **1165.** The static pressure data may represent the static pressure within the fill manifold **1141,** and therefore, by extension, the static pressure of the cell **1160a** in fluid communication therewith. The controller may then calculate a difference between the dynamic pressure and the static pressure, thereby calibrating a dynamic target pressure value that may be related to a desired static pressure value. Additionally, as disclosed above, the controller **1145** may cause the fluid source **1105** to emit additional fluid into the fill manifold **1141** and receive successive measurements of the dynamic and static pressures of the cell **1160a,** thereby providing redundancy in the calibration of the dynamic target fill pressure.

In another non-limiting example, it may be desirable to isolate the fluid source **1105** from the fill manifold **1141** while static pressure measurements are made. The isolation may be useful if it is determined that the fluid source **1105** leaks when the fluid source is disabled (by means of a command issued over control line **1106** from controller **1145).** Under such conditions, the fluid source **1105** may be disabled, and the fill valve **1120** may be placed in a state to isolate the fluid source from the fill manifold **1141** while the controller **1145** receives the static pressure measurement from the pressure sensor **1165.**

It may be appreciated that the method for calibrating a dynamic sensor target pressure for one cell (such as **1160a**) may be extended to any number of cells (such as **1160b**) that are incorporated into the compression therapy appliance.

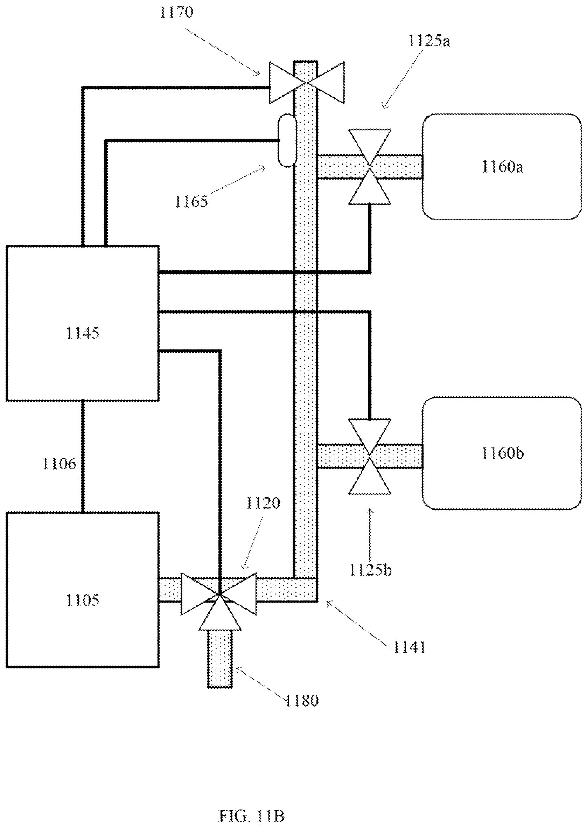

**FIG. 11B** depicts another non-limiting example of a compression therapy system that may use the calibration method disclosed above. The system depicted in **FIG. 11B** differs from that depicted in **FIG. 11A** in that fill valve **1120** is a three-way valve capable of placing the output of the fluid source **1105** in fluid communication with the fill manifold **1141,** isolating the fluid source output, and placing the output of the fluid source in fluid communication with a fluid receiver **1180.** The states of the fill valve **1120** - source-to-manifold, source isolation, and source-to-receiver - may be controlled by the controller **1145.** The fluid receiver **1180** may comprise any device or environment capable of receiving the fluid emitted by the fluid source **1105.** Non-limiting examples of the fluid receiver **1180** may include the atmosphere and a source of a vacuum. For a system having a configuration depicted by **FIG 11B,** the fluid source **1105** may remain active while the controller **1145** receives the static pressure measurement from the pressure sensor **1165.** For example, the fill valve **1120** may be placed in a state to direct the fluid flow into the fluid receiver **1180,** thereby isolating the fill manifold **1141** from the fluid source **1105** during the static pressure measurement.

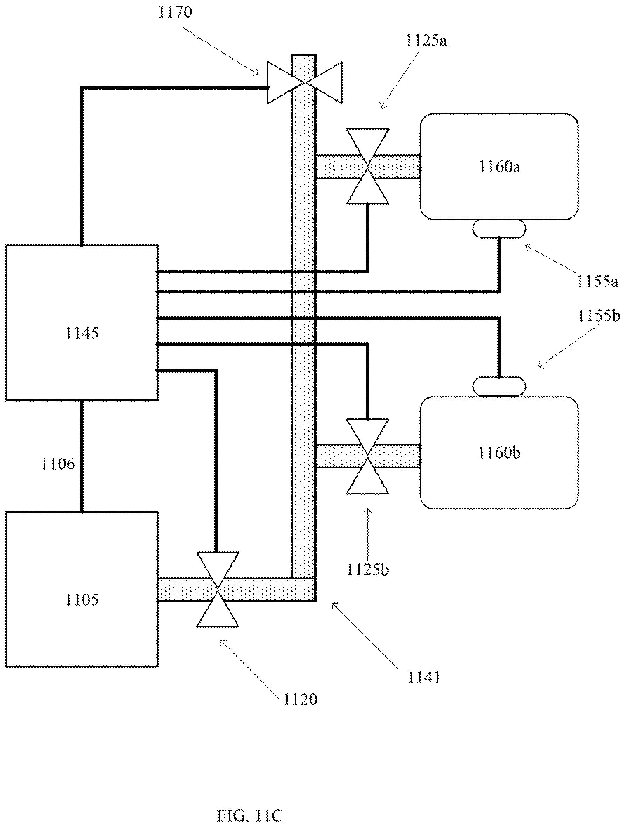

**FIG. 11C** depicts yet another embodiment of a compression therapy system that may be calibrated according to the method disclosed above. In the system depicted in **FIG. 11C,** there is no pressure sensor associated with the fill manifold **1141.** Instead, each cell **1160a** and **1160b** has a pressure sensor (**1155a** and **1155b,** respectively) configured to measure a pressure within the cell. The controller **1145** may be configured to receive dynamic pressure data and static pressure data from pressure sensors **1155a** and **1155b.** The output of the fluid source **1105** may be placed in fluid communication with the fill manifold **1141** *via* fill valve **1120** under control of controller **1145.** The fluid may enter the fill manifold **1141** and be admitted into a cell (for example **1160a**) by the action of an associated cell valve (for example **1125a**) also under control of the controller **1145.** While cell valve **1125a** is open, the controller **1145** may receive dynamic pressure sensor data from pressure sensor **1155a** associated with the cell **1160a.** The receipt, by the cell **1160a,** of the fluid may be halted by the controller **1145** configuring cell valve **1125a** to close. The controller **1145** may receive static pressure sensor data from pressure sensor **1155a** while cell valve **1125a** is in the closed configuration. The controller **1145** may place the cell valve **1125a** into an open configuration, thereby permitting fluid to enter the cell **1160a** from the fill manifold **1141.**

The present disclosure is not to be limited in terms of the particular embodiments described in this application, which are intended as illustrations of various aspects. The invention is defined by the claims. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods, reagents, compounds, compositions or biological systems, which can, of course, vary. It is also to be understood that the terminology used herein is for the purpose of describing particular embodiments only, and is not intended to be limiting.

**Claims**

1. An auto-calibrating pneumatic compression therapy device configured for compression therapy, the device comprising:

   an inflatable compression sleeve comprising an inflatable cell (1160),
   a fill manifold (1141) configurable to be in fluid communication with the inflatable cell,
   a fluid source (1105) having a source output configured to introduce a fluid into the inflatable cell via the fill manifold,
   a fill valve (1120) positioned between the fluid source and fill manifold that is configured to moderate fluid output from the fluid source into the fill manifold,
   a cell valve (1125) disposed between the inflatable cell and the fill manifold configured to moderate fluid flow from the fill manifold into the inflatable cell,
   an exhaust valve (1170) that can be closed when the fill valve opens,
   a pressure sensor, (1165) and
   a controller (1145) configured to receive pressure sensor data from the pressure sensor, and to control actions of the fill valve, cell valve and the fluid source, the controller comprising at least one processor device and at least one non-transitory memory storage device;
   wherein the controller is adapted:

      to receive, when the inflatable cell receives a first portion of fluid from the fluid source, dynamic pressure sensor data related to a dynamic pressure within the fill manifold and/or inflatable cell,
      to close the fill valve to prevent fluid output into the fill manifold and subsequently to receive static pressure sensor data related to a static pressure within the fill manifold and/or inflatable cell,
      when the exhaust valve is closed, to calculate a pressure difference between the dynamic pressure sensor data and the static pressure sensor data, and
      to calibrate a dynamic pressure sensor target value based, at least in part, on one or more of a static pressure sensor target value, the dynamic pressure sensor data, the static pressure sensor data, and the pressure difference.

2. The device of claim 1, wherein the pressure sensor is configured to measure a pressure within the fill manifold.

3. The device of claim 1, wherein the pressure sensor is configured to measure a pressure within the inflatable cell.

4. The device of claim 1, wherein the controller is adapted, when the cell receives a first portion of fluid from the fluid source,
   to enable the fluid source to emit the fluid into the fill manifold, and
   to configure the valve to place the cell in fluid communication with the fill manifold.

5. The device of claim 1, wherein the controller is adapted, when receiving static pressure sensor data related to a static pressure within the inflatable cell, to cause the fluid source to cease emitting a fluid into the fill manifold, and to receive static pressure sensor data related to a static pressure within the cell.

6. The device of claim 1, wherein the controller is adapted, when receiving static pressure sensor data related to a static pressure within the inflatable cell, to configure the valve to fluidly isolate the cell from the fill manifold, and to receive static pressure sensor data related to a static pressure within the inflatable cell.

7. The device of claim 1, wherein the controller is adapted, when receiving static pressure sensor data related to a static pressure within the inflatable cell, to isolate the fill manifold from the output of the fluid source,
to place the output of the fluid source in fluid communication with a receiver of fluid, and
to receive static pressure sensor data related to a static pressure within the cell.

8. The device of claim 7, wherein the receiver of fluid is the atmosphere.

9. The device of claim 7, wherein the receiver of fluid is a source of a vacuum.

10. The device of claim 1, wherein the controller is further adapted to store, in the at least one non-transitory memory storage device, the dynamic pressure sensor target value.

11. The device of claim 1, wherein:

the inflatable compression sleeve comprises at least a second independently inflatable cell in fluid communication with the fluid source;
the compression therapy device further comprises at least a second cell valve disposed between the at least second inflatable cell and the fill manifold; and
the controller is configured to control one or more actions of the at least second cell valve.

12. The device of claim 11, further comprising at least a second pressure sensor, wherein the controller is configured to receive pressure sensor data from the at least second pressure sensor.

13. The device of claim 11, wherein, when the cell receives a portion of fluid from the fluid source, the cell receives a first portion of fluid from the fluid source and the at least second cell receives a second portion of fluid from the fluid source.

14. The device of claim 1, wherein the controller is further adapted to provide an indicator if a value of the difference exceeds a difference threshold.

15. The device of claim 14, wherein the indicator comprises one or more of an optical indicator, an audible indicator, a text indicator displayed on a readable output device in data communication with the controller, and a graphical indicator on a viewable output device in data communication with the controller.

**Patentansprüche**

1. Eine automatisch kalibrierende pneumatische Kompressionstherapievorrichtung, die für die Kompressionstherapie konfiguriert ist, wobei die Vorrichtung umfasst:

eine aufblasbare Kompressionshülse, umfassend eine aufblasbare Zelle (1160),
einen Füllverteiler (1141), der so konfiguriert ist, dass er mit der aufblasbaren Zelle in Fluidverbindung steht,
eine Fluidquelle (1105) mit einem Quellenauslass, der konfiguriert ist, um ein Fluid in die aufblasbare Zelle über den Füllverteiler einzuführen,
ein Füllventil (1120), das zwischen der Fluidquelle und dem Füllverteiler positioniert ist und so konfiguriert ist, dass es den Fluidausstoß von der Fluidquelle in den Füllverteiler abbremst,
ein Zellventil (1125), das zwischen der aufblasbaren Zelle und dem Füllverteiler angeordnet ist und konfiguriert ist, um den Fluidfluss vom Füllverteiler in die aufblasbare Zelle abzubremsen,
ein Ablassventil (1170), das geschlossen werden kann, wenn das Füllventil geöffnet wird,
einen Drucksensor (1165) und
eine Steuerung (1145), die konfiguriert ist, um Drucksensordaten vom Drucksensor zu empfangen und Aktionen des Füllventils, des Zellventils und der Fluidquelle zu steuern, wobei die Steuerung mindestens eine Prozessorvorrichtung und mindestens eine nicht-vorübergehenden Speichervorrichtung umfasst;
wobei die Steuerung angepasst ist:

wenn die aufblasbare Zelle einen ersten Teil des Fluids von der Fluidquelle empfängt, dynamische Drucksensordaten zu erhalten, die sich auf einen dynamischen Druck innerhalb des Füllverteilers und/oder der aufblasbaren Zelle beziehen,

das Füllventil zu schließen, um Fluidausstoß in den Füllverteiler zu verhindern und anschließend statische Drucksensordaten zu erhalten, die sich auf einen statischen Druck im Füllverteiler und/oder der aufblasbaren Zelle beziehen, wenn das Ablassventil geschlossen ist,

eine Druckdifferenz zwischen den dynamischen Drucksensordaten und den statischen Drucksensordaten zu berechnen, und

einen Zielwert für einen dynamischen Drucksensor zu kalibrieren, der zumindest teilweise auf einem oder mehreren von den Zielwerten eines statischen Drucksensors, den Daten des dynamischen Drucksensors, den Daten des statischen Drucksensors und der Druckdifferenz basiert.

2. Vorrichtung nach Anspruch 1, wobei der Drucksensor konfiguriert ist, um einen Druck innerhalb des Füllverteilers zu messen.

3. Vorrichtung nach Anspruch 1, wobei der Drucksensor konfiguriert ist, um einen Druck innerhalb der aufblasbaren Zelle zu messen.

4. Vorrichtung nach Anspruch 1, wobei die Steuerung angepasst ist, wenn die Zelle einen ersten Teil des Fluids von der Fluidquelle empfängt,

es der Fluidquelle zu ermöglichen, das Fluid in den Füllverteiler abzugeben, und

das Ventil zu konfigurieren, die Fluidkommunikation mit dem Füllverteiler zu stellen.

5. Vorrichtung nach Anspruch 1, wobei die Steuerung angepasst ist, wenn statische Drucksensordaten empfangen werden, die sich auf einen statischen Druck in der aufblasbaren Zelle beziehen,

zu bewirken, dass die Fluidquelle aufhört, ein Fluid in den Füllverteiler abzugeben, und

statische Drucksensordaten zu empfangen, die sich auf einen statischen Druck innerhalb der Zelle beziehen.

6. Vorrichtung nach Anspruch 1, wobei die Steuerung angepasst ist, wenn statische Drucksensordaten empfangen werden, die sich auf einen statischen Druck in der aufblasbaren Zelle beziehen,

das Ventil so zu konfigurieren, dass es die Zelle vom Füllverteiler in Fließverbindung isoliert und statische Drucksensordaten in Bezug auf einen statischen Druck in der aufblasbaren Zelle empfängt.

7. Vorrichtung nach Anspruch 1, wobei die Steuerung angepasst ist, wenn statische Drucksensordaten empfangen werden, die sich auf einen statischen Druck in der aufblasbaren Zelle beziehen,

den Füllverteiler vom Ausgang der Fluidquelle zu isolieren,

den Ausgang der Fluidquelle in Fluidkommunikation mit einem Fluidempfänger zu bringen, und

statische Drucksensordaten in Bezug auf einen statischen Druck in der Zelle zu empfangen.

8. Vorrichtung nach Anspruch 7, wobei der Fluidempfänger die Atmosphäre ist.

9. Vorrichtung nach Anspruch 7, wobei der Fluidempfänger eine Vakuumquelle ist.

10. Vorrichtung nach Anspruch 1, wobei die Steuerung weiterhin dazu ausgelegt ist, den Zielwert des dynamischen Drucksensors in der mindestens einen nicht-vorübergehenden Speichervorrichtung zu speichern.

11. Vorrichtung nach Anspruch 1, wobei: die aufblasbare Kompressionshülse mindestens eine zweite unabhängig aufblasbare Zelle in Fluidverbindung mit der Fluidquelle umfasst;

die Kompressionstherapievorrichtung weiterhin mindestens ein zweites Zellventil umfasst, das zwischen der mindestens zweiten aufblasbaren Zelle und dem Füllverteiler angeordnet ist; und

die Steuerung konfiguriert ist, um eine oder mehrere Aktionen des mindestens zweiten Zellenventils zu steuern.

12. Vorrichtung nach Anspruch 11, weiterhin umfassend mindestens einen zweiten Drucksensor, wobei die Steuerung konfiguriert ist, um Drucksensordaten von dem mindestens zweiten Drucksensor zu empfangen.

13. Vorrichtung nach Anspruch 11, wobei, wenn die Zelle einen Teil des Fluids von der Fluidquelle empfängt, die Zelle einen ersten Teil des Fluids von der Fluidquelle empfängt und die mindestens zweite Zelle einen zweiten Teil des Fluids von der Fluidquelle empfängt.

14. Vorrichtung nach Anspruch 1, wobei die Steuerung weiter angepasst ist, um einen Indikator bereitzustellen, wenn ein Wert der Differenz eine Differenzschwelle überschreitet.

**15.** Vorrichtung nach Anspruch 14, wobei der Indikator einen oder mehrere optische Indikatoren, einen hörbaren Indikator, einen Textindikator, der auf einem lesbaren Ausgabegerät in Datenkommunikation mit der Steuerung angezeigt wird, und einen grafischen Indikator auf einem sichtbaren Ausgabegerät in Datenkommunikation mit der Steuerung umfasst.

**Revendications**

**1.** Dispositif de thérapie par compression pneumatique à auto-étalonnage configuré pour la thérapie de compression, le dispositif comprenant :

un manchon de compression gonflable comprenant une cellule gonflable (1160)
un distributeur de remplissage (1141) pouvant être configuré pour être en communication fluide avec la cellule gonflable,
une source de fluide (1105) comportant une sortie de source configurée pour introduire un fluide dans la cellule gonflable via le distributeur de remplissage,
une vanne de remplissage (1120) positionnée entre la source de fluide et le distributeur de remplissage qui est configurée pour modérer la sortie de fluide de la source de fluide dans le distributeur de remplissage,
une vanne de cellule (1125) disposée entre la cellule gonflable et le distributeur de remplissage configurée pour modérer l'écoulement de fluide du distributeur de remplissage dans la cellule gonflable,
une vanne d'échappement (1170) qui peut être fermée quand la vanne de remplissage s'ouvre,
un capteur de pression (1165) et une commande (1145) configurée pour recevoir des données de capteur de pression depuis le capteur de pression, et pour commander des actions de la vanne de remplissage, la vanne de cellule et la source de fluide, la commande comprenant au moins un dispositif de processeur et au moins un dispositif de stockage en mémoire non transitoire ;
dans lequel la commande est adaptée :

pour recevoir, quand la cellule gonflable reçoit une première partie de fluide depuis la source de fluide, des données de capteur de pression dynamique liées à la pression dynamique dans le distributeur de remplissage et/ou la cellule gonflable,
pour fermer la vanne de remplissage pour empêcher la sortie de fluide dans le distributeur de remplissage et pour recevoir ensuite des données de capteur de pression statique liées à une pression statique dans le distributeur de remplissage et/ou la cellule gonflable, quand la vanne d'échappement est fermée,
pour calculer une différence de pression entre les données de capteur de pression dynamique et les données de capteur de pression statique, et
pour étalonner une valeur cible de capteur de pression dynamique en fonction, au moins en partie, d'une ou plusieurs d'une valeur cible de capteur de pression statique, des données de capteur de pression dynamique, des données de capteur de pression statique, et de la différence de pression.

**2.** Dispositif selon la revendication 1, dans lequel le capteur de pression est configuré pour mesurer une pression dans le distributeur de remplissage.

**3.** Dispositif selon la revendication 1, dans lequel le capteur de pression est configuré pour mesurer une pression dans la cellule gonflable.

**4.** Dispositif selon la revendication 1, dans lequel la commande est adaptée, quand la cellule reçoit une première partie de fluide depuis la source de fluide,
pour permettre à la source de fluide d'émettre le fluide dans le distributeur de remplissage, et
pour configurer la vanne pour placer la cellule en communication fluide avec le distributeur de remplissage.

**5.** Dispositif selon la revendication 1, dans lequel la commande est adaptée, quand elle reçoit des données de capteur de pression statique liées à une pression statique dans la cellule gonflable,
pour faire que la source de fluide cesse d'émettre un fluide dans le distributeur de remplissage, et
pour recevoir des données de capteur de pression statique liées à une pression statique dans la cellule.

**6.** Dispositif selon la revendication 1, dans lequel la commande est adaptée, quand elle reçoit des données de capteur de pression statique liées à une pression statique dans la cellule gonflable,
pour configurer la vanne pour isoler fluidiquement la cellule du distributeur de remplissage, et

pour recevoir des données de capteur de pression statique liées à une pression statique dans la cellule.

7. Dispositif selon la revendication 1, dans lequel la commande est adaptée, quand elle reçoit des données de capteur de pression statique liées à une pression statique dans la cellule gonflable,
pour isoler le distributeur de remplissage de la sortie de la source de fluide,
pour placer la sortie de la source de fluide en communication fluide avec un récepteur de fluide, et
pour recevoir des données de capteur de pression statique liées à une pression statique dans la cellule.

8. Dispositif selon la revendication 7, dans lequel le récepteur de fluide est l'atmosphère.

9. Dispositif selon la revendication 7, dans lequel le récepteur de fluide est une source de vide.

10. Dispositif selon la revendication 1, dans lequel la commande est en outre adaptée pour stocker, dans l'au moins un dispositif de stockage en mémoire non transitoire, la valeur cible de capteur de pression dynamique.

11. Dispositif selon la revendication 1, dans lequel :

le manchon de compression gonflable comprend au moins une seconde cellule gonflable indépendamment en communication fluide avec la source de fluide ;
le dispositif de thérapie par compression comprend en outre au moins une seconde vanne de cellule disposée entre l'au moins une seconde cellule gonflable et le distributeur de remplissage ; et
la commande est configurée pour commander une ou plusieurs actions de l'au moins une seconde vanne de cellule.

12. Dispositif selon la revendication 11, comprenant en outre au moins un second capteur de pression, dans lequel la commande est configurée pour recevoir des données de capteur de pression venant de l'au moins un second capteur de pression.

13. Dispositif selon la revendication 11, dans lequel la cellule reçoit une partie de fluide depuis la source de fluide, la cellule reçoit une première partie de fluide depuis la source de fluide et l'au moins une seconde cellule reçoit une seconde partie de fluide depuis la source de fluide.

14. Dispositif selon la revendication 1, dans lequel la commande est en outre adaptée pour fournir un indicateur si une valeur de la différence dépasse un seuil de différence.

15. Dispositif selon la revendication 14, dans lequel l'indicateur comprend un ou plusieurs d'un indicateur optique, un indicateur audible, un indicateur textuel affiché sur un dispositif de sortie lisible en communication de données avec la commande, et un indicateur graphique sur un dispositif de sortie visible en communication de données avec la commande.

Valve
125a

Cell A

140

Compression
Pump
105

Fill Valve
120

Valve
125b

Cell B

Transducer
115

Valve
125N

Cell N

Vacuum Source
110

Exhaust Valve
130

135

Controller
145

FIG. 1a

FIG. 1b

FIG. 2a

FIG. 2b

FIG 2c

FIG. 2d

FIG. 2

FIG. 3

A B C D E
FIG 4a

A B C D E
FIG 4b

A B C D E
FIG 4c

A B C D E
FIG 4d

A B C D E
FIG 4e

A B C D E
FIG 4f

A B C D E
FIG 4g

FIG. 4

A B C D E
FIG 5a

A B C D E
FIG 5b

A B C D E
FIG 5c

A B C D E
FIG 5d

A B C D E
FIG 5e

A B C D E
FIG 5f

A B C D E
FIG 5g

FIG. 5

FIG 6a  FIG 6b  FIG 6c  FIG 6d  FIG 6e  FIG 6f  FIG 6g  FIG 6h

FIG. 6

FIG 7a  FIG 7b  FIG 7c  FIG 7d

FIG. 7

FIG. 8

FIG. 9

Providing a Compression Therapy
Device
1010

Receiving, by an Inflatable Cell,
a Portion of Fluid from a Fluid
Source
1020

Receiving, by a Controller, Dynamic
Pressure Sensor Data
1030

Receiving, by the Controller, Static
Pressure Sensor Data
1040

Calculating, by the Controller,
Pressure Difference
1050

Calibrating, by the Controller, a
Dynamic Pressure Target Value
1060

FIG. 10

FIG. 11A

FIG. 11B

FIG. 11C

**EP 3 076 915 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011082401 A1